# EUROPEAN PATENT APPLICATION

(11) **EP 4 056 656 A1**
(43) Date of publication of application: **14.09.2022**
(21) Application number: 21162460.6
(22) Date of filing: 12.03.2021
(51) Int. Cl.: C09D 5/03, B05D 7/00, B32B 33/00, C09D 7/61, C09D 7/80, C09D 167/00, B05D 7/14, C08K 3/34, C08K 3/22

(54) **POWDER COATING PRIMER**

(71) Applicant: Pulver Kimya San. ve Tic. A.S., 41400 Kocaeli (TR)
(72) Inventor: WITTIG, Martin, 64297 Darmstadt (DE); CAGATAY PAKKAN, Hüseyin, Gebze 41400 Kocaeli (TR); SCOBEL, Ekkehard, 01159 Dresden (DE); ÜNALAN OKAR, Seniz, Gebze 41400 Kocaeli (TR)
(74) Representative: Neumann Müller Oberwalleney Patentanwälte PartG mbB

(57) **Abstract**

Primer composition for coating a substrate prior to application thereon an intumescent fire protecting coating; coating system, in particular for steel structures, wherein the coating system comprises the primer composition and an intumescent fire protecting coating composition to be applied onto the primer; process for the production of a powder coating composition as a primer for coating a substrate prior to application thereon of an intumescent fire protecting coating composition; process for coating a steel structural member with the coating system; and use of a porous material in the production of a powder coating composition.

## Description

This disclosure refers to a primer composition for coating a substrate prior to application thereon an intumescent fire protecting coating, to a coating system, in particular for steel structures, wherein the coating system comprises the primer composition and an intumescent fire protecting coating composition to be applied onto the primer, to a process for the production of a powder coating composition as a primer for coating a substrate prior to application thereon of an intumescent fire protecting coating composition, to a process for coating a steel structural member with the coating system and to a use of a porous material in the production of a powder coating composition.

GB 2 385 856 A discloses a water-based primer composition for coating a substrate prior to application thereon of a fire protecting coating composition, the primer composition comprising a water-soluble alkali metal silicate and a polymer binder.

In the event of fires in buildings with steel framework construction, the temperature of unprotected steel quickly increases to a point where the steel loses its rigidity and compromises the integrity of the structure. To overcome the problem, insulating the steel can increase the time to reach the point at which the structure becomes unstable. Intumescent coatings form an insulative foam on the surface of the steel only when exposed to heat or flame. Usually, intumescent coatings require a primer coating. Liquid primer coatings are prone to damage. In off-site application of the coating, liquid systems have proven difficult and slow to apply as well as requiring significant repair once the structure is erected. In on-site application, the wet coating has to dry and is easily damaged.

It is an objective to provide a primer composition for coating a substrate prior to application thereon an intumescent fire protecting coating, which is less prone to damage.

In an aspect, the objective is achieved by a primer composition according to clam1, in a further aspect by a coating system according to claim 10, in a further aspect by a process for the production of a powder coating composition according to claim 12, in yet a further aspect by a process for coating a steel structural member with the coating system according to claim 14 and in yet a further aspect by a use of a porous material in the production of a powder coating composition according to claim 15.

The primer composition for coating a substrate prior to application thereon of an intumescent fire protecting coating composition is a powder coating composition consisting of an extruded and subsequently ground mixture of binding and hardening agents, wherein the mixture contains pigments, filler and additives as optional components and wherein the powder coating composition contains a porous material in a proportion of one to twelve percent by weight.

The powder coating primer is advantageously more durable than a fluid primer composition. The primer composition is a solvent-free and environment-friendly coating, which is generally applied electrostatically to the substrate, on which it may be cured by baking or by radiative energy. The powder coating composition containing a porous material in a proportion of one to twelve percent by weight advantageously provides a primed surface to which the intumescent fire protecting coating composition can adhere and particularly preserves the adherence under the impact of heat or fire. In the sense of the disclosure, the porous material is a material containing pores or voids. It may be characterised by its porosity and/or the medium diameter of the pores.

Regarding the further aspect of a coating system, in particular for steel structures, the coating system comprises said primer and an intumescent fire protecting coating composition to be applied onto the primer. The intumescent fire protecting coating composition may be liquid, for example water-based or solvent-based.

Regarding the further aspect of a process for the production of a powder coating composition as a primer for coating a substrate prior to application thereon of an intumescent fire protecting coating composition, binding and hardening agents, and as optional components pigments, fillers and additives are processed in an extruder, wherein an extrudate obtained in this way is ground and wherein a porous material is subsequently blended in with a proportion of one to twelve percent by weight of the powder coating composition.

Regarding the further aspect of a process for coating a steel structural member with said coating system, the primer is applied to the steel structural member and then the intumescent fire protection coating is applied on the primer.

Regarding the further aspect of a use of a porous material in the production of a powder coating composition for coating a substrate prior to application thereon of an intumescent fire protecting coating composition, the powder coating composition consists of an extruded and ground mixture of binding and hardening agents, wherein the mixture contains pigments, fillers and additives as optional components and wherein the porous material is blended into the ground mixture in a proportion of one to twelve percent by weight of the powder coating composition.

In an embodiment of any one of said aspects, the proportion of the porous material can be three to ten percent by weight, in particular the proportion of the porous material can be five to seven percent by weight.

In a further embodiment of any one of said aspects, the porous material can be blended into the milled mixture. The adherence of the intumescent fire protecting coating composition to the substrate coated with the primer composition, may advantageously be enhanced by bonding the porous material to powder coating particles of the milled mixture. In particular, the application behaviour is improved by bonding the porous material. When mixing in the porous material, the deposition efficiency is reduced. Starting at approximately 4% and more of admixture, the necessary layer thickness may not be achieved any more. By bonding, this effect is reduced or shifted to higher additive quantities. Further, bonded powder compositions have better processability and stability than non-bonded powder compositions, especially in continuous systems with powder circulation. The porous material bonded to the powder matrix results in a significantly improved adhesion of the intumescent coating in case of fire.

For example, the porous material is bonded in a mixer to the powder coating particles of the ground mixture. The powder coating composition is generally prepared by mixing the constituents and homogenizing the melted mixture in the extruder. Subsequently, solid lumps of extruded powder coating composition ground to the desired particle size. The porous material, however, owing to the grinding process employed during the preparation of the powder coating composition, can be destroyed, at least to a significant portion. Advantageously, the destruction of the porous material can be prevented by admixing it to the powder coating composition after grinding, which is also called dry-blending. Mainly due to different particle sizes and less important due to different densities and electrostatic charging behaviour of the extruded powder coating particles and the porous material, the powder coating composition may segregate. The effect of segregation can advantageously be reduced by the bonding process, wherein a uniform adhesion of the porous material to surfaces of the extruded powder coating particles is achieved. By heating the extruded powder coating particles to almost glass-transition temperature Tg, the porous material is bonded to the sticky powder coating particles, thus reducing the segregation.

In a further embodiment of any one of said aspects, the porous material is at least mesoporous. The mesoporous material, for example, contains pores with diameters between 2 and 50 nanometre. In this context, mesoporosity refers to a classification of nanoscale porosity. Advantageously, the porous material can be microporous, containing pores with diameters less than 2 nanometre. Examples of microporous materials include zeolites and metal-organic frameworks. According to an embodiment, the porous material can be diatomaceous earth or another natural or synthetic microporous material.

In a further embodiment of the primer composition, the mixture contains pigments of titanium dioxide, as filler one or more of calcium carbonate, talc and barium sulfate, further as additives a levelling agent, such as polyacrylate, and/or a degassing agent, such as benzoin.

In the following, the disclosure is illustrated with reference to implementation examples

### EXAMPLES

Without further elaboration, it is believed that one skilled in the art can, using the preceding description, utilize the aspects of the disclosure to its full extent. The following exemplary specific embodiments are therefore to be construed as merely illustrative. In the foregoing and in the following examples, all temperatures are set forth uncorrected in degrees Celsius, and, unless otherwise indicated, all parts and percentages are by weight.

### Example 1

Primer composition for coating a substrate prior to application thereon of an intumescent fire protecting coating composition, the primer composition being a powder coating composition consisting of a first basic formulation for one of the group of epoxy-polyester, polyester/polyurethane and epoxy base, consisting of
binding and hardening agents: 50.00%,
levelling agent: 0.30%,
degassing agent: 0.50%,
titanium dioxide: 7.50%,
tinting pigments 0.60%, and
filler: 41.10%,
the first basic formulation being extruded and subsequently ground. The primer composition is subsequently obtained by bonding the porous material into the first basic formulation in a bonding mixer, the resulting powder coating composition consisting of
the first basic formulation: 94.00% and
diatomaceous earth: 6.00%.

Example 1 is a generic composition in regard to the binding and hardening agents. A coating system to be applied to a steel structure comprises the primer composition of example 1 and an intumescent fire protecting coating composition to be applied onto the primer composition. The intumescent fire protecting coating composition may be liquid, for example water-based or solvent-based.

### Example 2

Primer composition for coating a substrate prior to application thereon of an intumescent fire protecting coating composition, the primer composition being a powder coating composition consisting of a second basic formulation for epoxy-polyester, consisting of
epoxy resin: 15.00%,
acidic polyester resin: 35.00%,
levelling agent: 0.10%,
degassing agent: 0.10%,
titanium dioxide: 7.50%,
tinting pigments: 0.60%,
calcium carbonate: 40.20%, and
talc: 1.50%,
the second basic formulation being extruded and subsequently ground. The primer composition is subsequently obtained by bonding the porous material into the second basic formulation in a bonding mixer, the resulting powder coating composition consisting of
the second basic formulation: 94.00% and
diatomaceous earth: 6.00%.

A coating system to be applied to a steel structure comprises the primer composition of example 2 and an intumescent fire protecting coating composition to be applied onto the primer composition. The intumescent fire protecting coating composition may be liquid, for example water-based or solvent-based.

### Reference example

Powder coating composition consisting of
epoxy resin: 15.00%,
acidic polyester resin: 35.00%,
levelling agent: 0.10%,
degassing agent: 0.10%,
titanium dioxide: 7.50%,
tinting pigments: 0.60%,
calcium carbonate: 40.20%, and
talc: 1.50%.

Non-limiting embodiments, advantages and experiments are described with respect to the attached images, wherein
Figure 1 shows a photograph illustrating a laboratory fire test of a coating system;
Figure 2 shows a diagram representative of a measured microroughness of an exemplary liquid primer composition;
Figure 3 shows a diagram representative of a measured microroughness of the primer composition according to the reference example;
Figure 4 shows a SEM image of a diatomaceous earth;
Figures 5 to 7 SEM images of a surface of the primer composition according to example 2 after application;
Figure 8 a light optical microscope image of the surface of the primer composition according to example 2 after application.
Figure 9 shows a photograph of the coating system including a primer composition according to the reference example after completion of the laboratory fire test;
Figure 10 shows a photograph of a further coating system including the primer composition according to the reference example after completion of the laboratory fire test;
Figure 11 shows a photograph of a coating system including a primer composition according to example 2 after completion of the laboratory fire test;

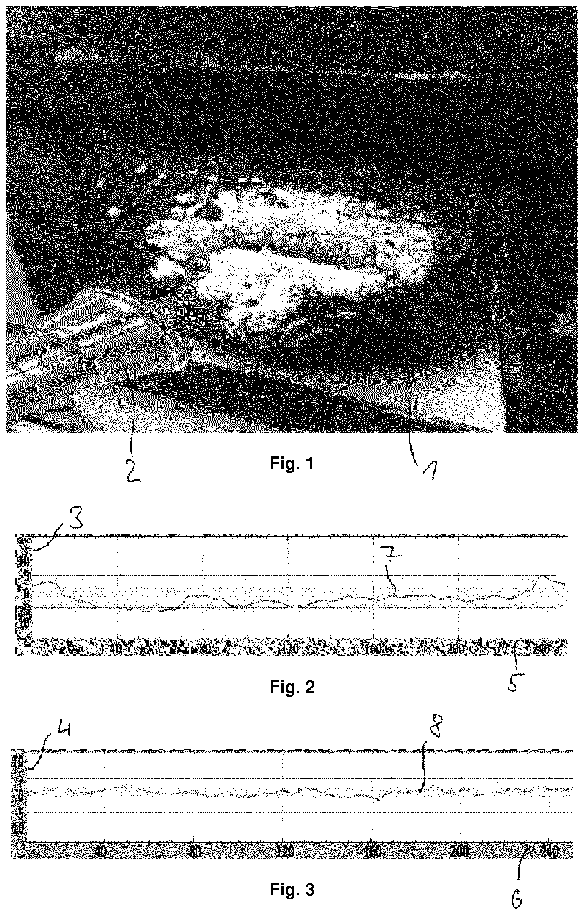

In Figure 1 a photograph of an exemplary laboratory fire test is shown. A substrate coated with an intumescent layer 1 is subjected to fire with a gas burner 2. For many applications in steel construction, powder coating provides high-quality corrosion protection and a decorative layer. For steel structures that have to be coated with an intumescent layer for improved fire resistance, however, liquid coating systems are used, which are applied manually, as commercially available powder primers do not provide the required and certified fire protection class. State of the art powder coatings as primers for fire protection coatings provide poor adhesion of the intumescent layer on powder coatings. Intumescent layers have a low binder content of typically below 10%, which is one reason for a weak dry adhesion.

However, the decisive factor for failure is the slipping of the foaming intumescent layer in a fire test. Foaming of the intumescent layer occurs at temperatures of 250-300°C. Whether the adhesion between the primer and the intumescent layer is sufficient is thus tested in fire tests.

Relevant mechanisms for adhesion between coating layers are the chemical valence bond between functional groups and the physical adherence of rough surfaces, which is referred to with regard to Figures 2 and 3 now. In Figure 2, a diagram representative of a measured microroughness of a liquid primer composition approved for fire protection systems is shown. In Figure 3, a diagram representative of a measured microroughness of the primer composition according to the reference example is shown. The respective ordinate axes 3, 4 represent a deviation of the respective surfaces from a nominal value of zero in µm over a length dimension in µm on the abscissae axes 5, 6. As can be seen in the curve 7, the deviations of the liquid primer surface are about twice as high as those of the smoother powder coating primer, represented by the curve 8. An increase in the microroughness of powder coatings, which improves the adhesion values, is advantageously achieved by blending in a porous material subsequently to grinding with a proportion of one to twelve percent by weight of the powder coating composition. Even more advantageously, capillary forces wielded by the porous material are effective in the molecular range. The narrower the capillary, the greater the effect. For example, the natural raw material diatomaceous earth, a deposit of the silicate shells of diatoms, is capable of absorbing up to three times its own weight in liquid and binding it.

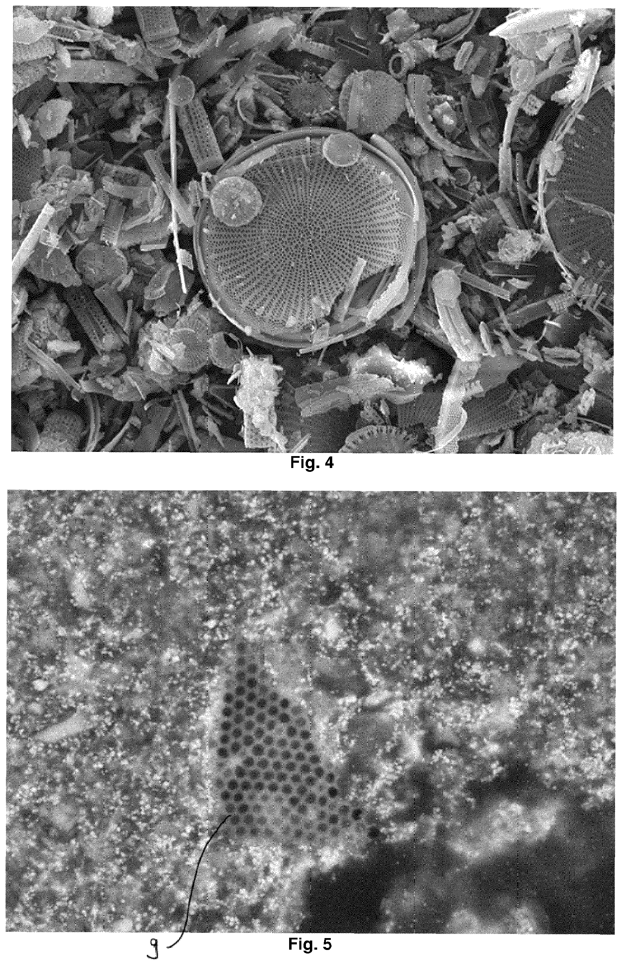

In Figure 4, a SEM image of diatomaceous earth is shown. To take advantage of the additional adhesion provided by the capillary forces, the diatomaceous earth particles should be present on the surface of the coating layer as unbroken as possible. This can be achieved by dry-blending the diatomaceous earth into the powder coating composition subsequently to grinding. This procedure has the additional advantage that the binder chemistry and formulation of the powder coating composition have little influence on the adhesion result.

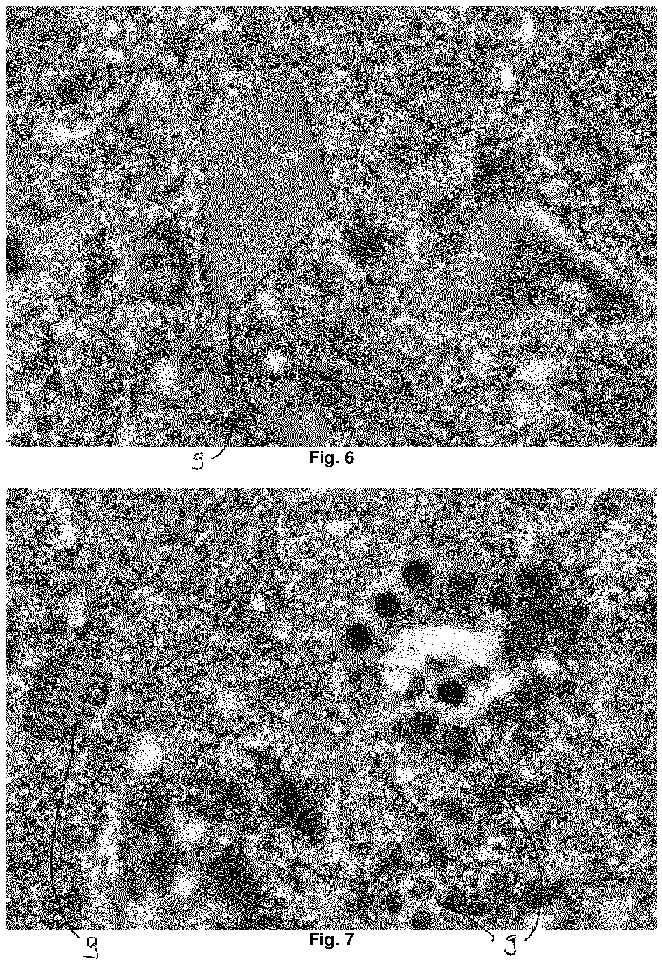

In Figures 5 to 7, SEM images of a surface of the primer composition according to example 2 after application are shown. The SEM images of the primer layer illustrate that unchanged fragments 9 of diatomaceous earth are actually present on the surface.

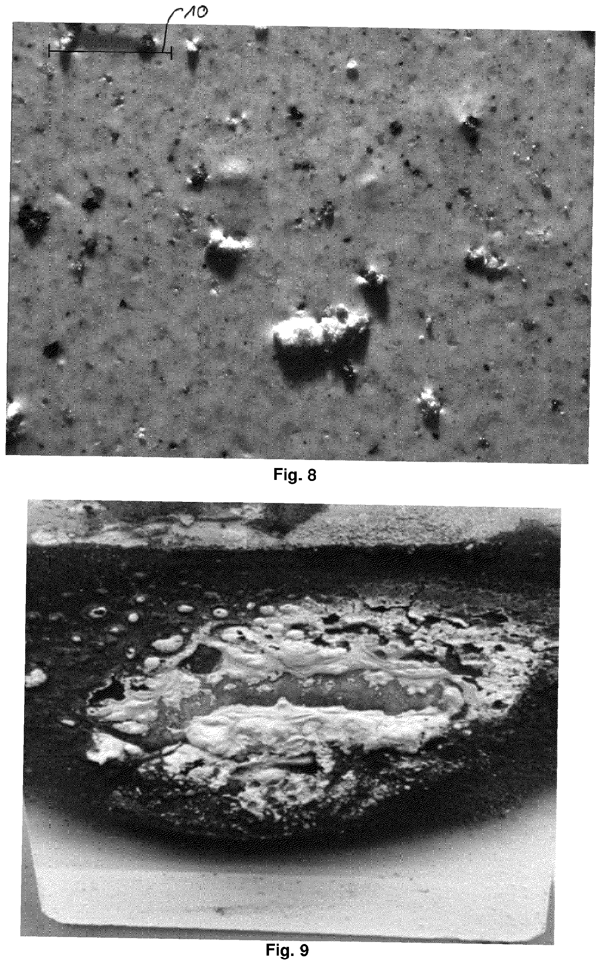

In Figure 8, a light optical microscope image of the surface of the primer composition according to example 2 after application is shown. The scale 10 has a length of 500 µm. The light optical microscope image illustrates that the primer composition surface further provides sufficient roughness for a good mechanical adhesion.

The presence of unaltered, unbroken fragments of diatomaceous earth on the primer surface and the increased roughness provide enhanced adhesion properties of the primer to the intumescent layer. The capillary forces of the diatomaceous earth advantageously absorb solvents and binders of the foaming intumescent layer, thus maintaining the firm adhesion under the impact of heat and/or fire.

The amount of diatomaceous earth required for safe adhesion may disturb the processing of the primer powder during electrostatic application. In order to enhance application behaviour, even in automatic application systems, the diatomaceous earth can be blended into the powder coating composition subsequently to grinding by way of bonding the diatomaceous earth particles in a mixer to the powder coating particles of the ground mixture.

### Experiment 1: X-cut test

To test the adhesion of intumescent layers to powder primers, three millimetre thick steel sheets were primed, once with the primer composition according to example 2 and as a reference with the primer composition according to the reference example. Subsequently, identical -500 µm thick intumescent layers of Sika^{®} Pyroplast^{®} ST-100 were applied onto the primer layers. According to DIN EN ISO 16276-2 "Corrosion protection of steel structures by protective paint systems - Assessment of, and acceptance criteria for, the adhesion/cohesion (fracture strength) of a coating - Part 2: Cross-cut testing and X-cut testing", the X-cut testing is applicable for coatings over 250 µm thickness. A cut in the form of an X (X-cut) is made into the coating, penetrating through to the substrate. X-cut test results are shown in Table 1 below.

**Table 1: D002014 Trial 12-17 denominate the primer composition according to example 2 with the given thickness, applied on steel sheets (Tex. means an increased surface roughness attained through additive). About 500 µm thick layers of Sika^{®} Pyroplast^{®} ST-100 were applied onto the primer layers. Adhesion results of the X-cut test are given in the right column.**

| **Primer** | | | **Top Coat** | | **Adhesion Result** |
|---|---|---|---|---|---|
| **Code** | **Surface** | **Thickness (µ)** | | **Thickness (µ)** | **X cut** |
| D002014 Trial 12 | Tex. | 60.95 | **Sika 100** | - 500 | ✔ Perfect |
| D002014 Trial 13 | Tex. | 55.80 | | - 500 | ✔ Very good |
| D002014 Trial 14 | Tex. | 55-70 | | - 500 | ✔ Very good |
| D002014 Trial 15 | Tex. | 50-75 | | - 500 | ✔ Perfect |
| D002014 Trial 16 | Tex. | 60-75 | | - 500 | V Good |
| D002014 Trial 17 | Tex. | 50-90 | | - 500 | ✔ Perfect |

To test the adhesion of intumescent layers to powder primers, three millimetre thick steel sheets were primed, now with the primer composition according to the reference example and other primers according to the state of the art. Subsequently, again identical -500 µm thick intumescent layers of Sika^{®} Pyroplast^{®} ST-100 were applied onto the primer layers. The X-cut test could not be executed correctly as the adhesion of the intumescent layer to the primer was too weak, cf. Table 2 below.

**Table 2: Four different thermoset primers, followed by the curing conditions temperature (180°C) and time (5 or 10 minutes) and one thermoplastic primer are listed. The surface property of the steel plate is given (Tex. means an increased roughness attained through additive compared to a smooth surface), and the thermoset primer base (EP - epoxy-based primer, PP -polyester-based primer, matt or glossy).**

| **Primer** | | | **Top Coat** | | **Adhesion Result** |
|---|---|---|---|---|---|
| **Code (curing cond.)** | **Surface & Type** | **Thickness (µ)** | **Code** | **Thickness (mm)** | |
| **thermoset #1** (180°C&5') | Tex. &EP-MATT | 70-80 | Sika 100 | 1,2-1,3 | X (visually good adhesion but no bonding,bad) |
| **thermoset #1** (180°C&10') | Tex. &EP-MATT | 70-80 | Sika 100 | 1,2-1,3 | X (visually good adhesion but no bonding,bad) |
| **thermoset #2** (180°C&5') | Smooth & PP-MAT | 60-70 | Sika 100 | 1,2-1,3 | X (visually little adhesion,no bonding,bad) |
| thermoset #2 (180°C&10') | Smooth & PP-MAT | 60-70 | Sika 100 | 1,2-1,3 | X (bad) |
| **thermoset #3** (180°C&5') | Tex. & PP-MAT | 60-70 | Sika 100 | 1,2-1,3 | X (bad) |
| **thermoset #3** (180°C&10') | Tex. & PP-MAT | 60-70 | Sika 100 | 1,2-1,3 | X (no adhesion) |
| **thermoset #4** (180°C&10') | Smooth & EP-S.GLZ | 60-70 | Sika 100 | 1,2-1,3 | X (no adhesion) |
| **thermoplastic** | smooth | thicker | Sika 100 | thinner | X (no adhesion) |

### Experiment 2: fire test

As noted before, one further factor for failure is tested in a fire test, wherein foaming of the intumescent layer occurs at temperatures of 250-300°C. During the fire test the foaming intumescent layer must not slip of the primer layer.

In Figure 9, a photograph of the coating system including a primer composition according to the reference example is shown, which was taken after completion of the laboratory fire test as described above. The intumescent layer slipped in the laboratory test, i.e. the coating system failed.

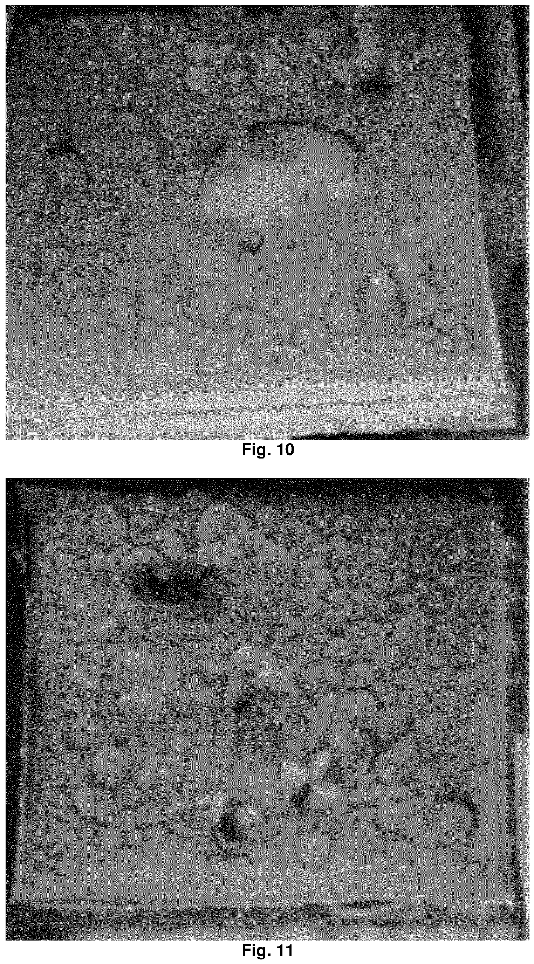

In Figure 10, a photograph of a further coating system including the primer composition according to the reference example after completion of another laboratory fire test is depicted. For this laboratory fire test boards dimensioned 500 mm x 500 mm x 5 mm were coated as described above. A drop and/or slipping of the intumescent layer can be observed, which means that the tests according to EN 13381-8 are not passed.

In Figure 11, a photograph of a coating system including a primer composition according to example 2 after completion of the laboratory fire test is depicted. If the intumescent layer remains closed, the test according to EN 13381-8 is passed. After completion of the laboratory fire test, the intumescent layer does not show any failure or slip. The powder primer composition according to example 2 with the intumescent layer fulfils the fire protection tests according to EN 13381-8 and EN 1363-1.

### Reference Numerals

- 1: Substrate coated with an intumescent layer
- 2: Gas burner
- 3: Axis of ordinates
- 4: Axis of ordinates
- 5: Axis of abscissae
- 6: Axis of abscissae
- 7: Curve
- 8: Curve
- 9: Fragments
- 10: Scale

## Claims

1. Primer composition for coating a substrate prior to application thereon of an intumescent fire protecting coating composition, the primer composition being a powder coating composition consisting of an extruded and subsequently ground mixture of binding and hardening agents, wherein the mixture contains pigments, filler and additives as optional components and wherein the powder coating composition contains a porous material in a proportion of one to twelve percent by weight.

2. Primer composition according to claim 1, **characterized in that** the proportion of the porous material is three to ten percent by weight.

3. Primer composition according to claim 1, **characterized in that** the proportion of the porous material is five to seven percent by weight.

4. The primer composition according to claim 1, **characterized in that** the porous material is blended into the milled mixture.

5. Primer composition according to claim 1, **characterized in that** the porous material is bonded to powder coating particles of the milled mixture.

6. Primer composition according to claim 1, **characterized in that** the porous material is at least mesoporous.

7. Primer composition according to claim 1, **characterized in that** the porous material is microporous.

8. Primer composition according to claim 1, **characterized in that** the porous material is diatomaceous earth or another natural or synthetic microporous material, such as a zeolite or active alumina.

9. Primer composition according to claim 1, **characterized in that** the mixture contains pigments of titanium dioxide, as filler one or more of calcium carbonate, talc and barium sulfate, further as additives a levelling agent, such as polyacrylate, and/or a degassing agent, such as benzoin.

10. Coating system, in particular for steel structures, wherein the coating system comprises a primer composition according to any one of claims 1 to 9 and an intumescent fire protecting coating composition to be applied onto the primer.

11. Coating system according to claim 10, **characterized in that** the intumescent fire protecting coating composition is liquid.

12. Process for the production of a powder coating composition as a primer for coating a substrate prior to application thereon of an intumescent fire protecting coating composition, wherein binding and hardening agents, and as optional components pigments, filler and additives are processed in an extruder, wherein an extrudate obtained in this way is ground and wherein a porous material is subsequently blended in with a proportion of one to twelve percent by weight of the powder coating composition.

13. Process according to claim 12, **characterized in that** the porous material is bonded in a mixer to powder coating particles of the ground mixture.

14. Process for coating a steel structural member with a coating system according to any one of claims 10 or 11, in which the primer is applied to the steel structural member and then the intumescent fire protection coating is applied on the primer.

15. Use of a porous material in the production of a powder coating composition for coating a substrate prior to application thereon of an intumescent fire protecting coating composition, wherein the powder coating composition consists of an extruded and ground mixture of binding and hardening agents, wherein the mixture contains pigments, filler and additives as optional components and wherein the porous material is blended or bonded into the ground mixture in a proportion of one to twelve percent by weight of the powder coating composition.
